# EUROPÄISCHE PATENTANMELDUNG

(11) **EP 4 775 552 A1**
(43) Veröffentlichungstag der Anmeldung: **15.07.2026**
(21) Anmeldenummer: 25151778.5
(22) Anmeldetag: 14.01.2025
(51) Int. Cl.: C04B 7/36

(54) **CO2-NEUTRALES HERSTELLUNGSVERFAHREN VON BETON**

(71) Anmelder: Ed. Züblin Aktiengesellschaft, 70567 Stuttgart (DE)
(72) Erfinder: Jaguste, Bernd, Stuttgart (DE)
(74) Vertreter: dompatent

(57) **Zusammenfassung**

Die vorliegende Erfindung betrifft ein CO₂-reduziertes Verfahren zur Herstellung von CaO und/oder Zementklinker aus einem kohlenstofffreiem Kalziumsalz unter Verwendung von Knallgas, einen COz-neutralen Herstellungsprozess von Beton, eine CO₂-freie Herstellung von Schwefelsäure, sowie eine Produktionsvorrichtung zur Herstellung von CaO und/oder Zementklinker, aus einem kohlenstofffreiem Kalziumsalz unter Verwendung von Knallgas.

## Beschreibung

Die vorliegende Erfindung betrifft ein CO₂-reduziertes Verfahren zur Herstellung von CaO und/oder Zementklinker, aus einem kohlenstofffreiem Kalziumsalz unter Verwendung von Knallgas und einen COz-neutralen Herstellungsprozess von Beton, eine COz-freie Herstellung von Schwefelsäure, sowie eine Produktionsvorrichtung zur Herstellung von CaO und/oder Zementklinker, aus einem kohlenstofffreiem Kalziumsalz unter Verwendung von Knallgas.

Circa 6 % bis 9% des derzeitigen weltweiten menschlichen COz-Ausstoßes werden bei der Zementherstellung freigesetzt (https://de.wikipedia.org/wiki/Beton#CO2-Emissionen, abgerufen am 09.12.2024). Um hier eine Klimaneutralität zu erreichen, muss der Prozess der Zement- bzw. Betonherstellung möglichst CO₂-frei erfolgen.

Die bisherige Herstellung von Zement basierte auf der Brennung von Kalkstein (CaCOs). Dieser Kalkstein wird zermahlen und in einem Drehrohrofen bei Temperaturen von etwa 1.400 °C bis 1.450 °C zu sogenanntem Zementklinker (CaO) gebrannt. Beim Brennen wird das im Kalkstein gebundene Kohlendioxid freigesetzt. Der Nachteil dieser Methode besteht in der hohen Menge an CO₂ welches ausgestoßen wird, da sowohl beim Heizen des Drehrohrofens als auch beim Brennen des Kalksteins CO₂ entsteht.

Das Müller-Kühne Verfahren stellt ein weiteres Verfahren der Zementklinkerherstellung dar (DE19625538 B4; Kühne, H., Entwicklung des Gips-Schwefelsäure-Verfahrens nach Müller-Kühne, Chem. Ing. Tech. 1949(21), 11-12, 227-229). Bei diesem Verfahren wird Gips oder Calziumsulfat-Anhydrit (CaSO₄) in Kombination mit Kohlenstoff als Ausgangsmaterial verwendet. In einem ersten Schritt reagiert das Anhydrit bei Temperaturen im Bereich von 700 °C bis 900 °C zu Kalziumsulfid (CaS) und Kohlenstoffdioxid (CO₂) nach folgender Gleichung:

CaSO₄ + 2 C => CaS + 2 CO₂

Bei höheren Temperaturen (bis 1200 °C) reagiert das gebildete Calciumsulfid mit Anhydrit zu CaO und Schwefeldioxid (SO₂) nach folgender Formel:

CaS + 3 CaSO₄ => 4 CaO + 4 SO₂

Da beide Schritte nacheinander ablaufen stellt das Kalziumsulfid dementsprechend nur ein Zwischenprodukt in diesem Verfahren dar, sodass die Nettoreaktion folgende ist:

4 CaSO₄ + 2 C => 4 CaO + 4 SO₂ + 2 CO₂

Das entstehende gasförmige Schwefeldioxid wird aufgefangen und kann durch weitere Verfahrensschritte in separaten Anlagen zu Grundchemikalien wie Schwefelsäure (H₂SO₄) weiterverarbeitet werden (US3087790A, US4102989A, US3607045A).

Durch die Verwendung eines kohlenstofffreien Ausgangsstoffes im Müller-Kühne Verfahren wird die CO₂-Emission um ca. 50% reduziert (DE19625538 B4). Der Nachteil dieses Verfahrens ist jedoch, dass dem Ausgangsmaterial kohlenstoffbasierte Verbindungen als Reduktionsmittel beigemischt werden müssen, wodurch wiederum CO₂ während des Verfahrens freigesetzt wird. Ein weiterer Nachteil ist, dass beide Reaktionsschritte im selben Drehrohrofen stattfinden müssen, und dieser dementsprechend erhitzt und gekühlt werden muss, was einen großen energetischen Aufwand darstellt.

Der vorliegenden Erfindung liegt daher die Aufgabe zugrunde ein Verfahren zur Herstellung CaO und/oder Zementklinker, bereitzustellen, welches die Nachteile aus dem Stand der Technik verringert oder möglichst vermeidet. Insbesondere ist es die Aufgabe ein Verfahren bereit zu stellen, welches eine verringerte CO₂-Emission, bessere Energienutzung und eine bessere Atomökonomie gegenüber früheren Verfahren aufweist.

Darüber hinaus besteht die Aufgabe der vorliegenden Erfindung darin eine Vorrichtung zur CO₂-reduzierten Herstellung von CaO und/oder Zementklinker, und Schwefelsäure bereitzustellen.

Überraschenderweise hat sich gezeigt, dass ein optimiertes Müller-Kühne Verfahren ohne Einsatz von Reduktionsmitteln zu einem CO₂-verringerten Verfahren zur Herstellung von CaO und/oder Zementklinker, und zu einer CO₂-neutralem Herstellung von Beton geeignet ist.

In einer ersten Ausführungsform der vorliegenden Erfindung wird ein CO₂-reduziertes Verfahren zur Herstellung von CaO und/oder Zementklinker, aus einem kohlenstofffreiem Kalziumsalz unter Verwendung von Knallgas, in einer weiteren Ausführungsform ein CO₂-neutraler Herstellungsprozess von Beton sowie ein CO₂-neutrales Verfahren zur Herstellung von Schwefelsäure und in einer noch weiteren Ausführungsform eine Produktionsvorrichtung zur Herstellung von CaO und/oder Zementklinker, bereitgestellt. Diese Ausführungsformen und weitere bevorzugte Elemente der Erfindung werden nachfolgend ausführlich dargestellt. Merkmale, die zu einer Ausführungsform offenbart sind, gelten auch analog zu den weiteren Ausführungsformen und können beliebig miteinander kombiniert werden.

Überraschenderweise hat sich gezeigt, dass die der vorliegenden Erfindung zu Grunde liegende Aufgabe gelöst wird durch ein CO₂-reduziertes Verfahren zur Herstellung von CaO, aus einem kohlenstofffreiem Kalziumsalz unter Verwendung von Knallgas bereitgestellt, umfassend die folgenden Schritte:
i) Bereitstellung eines kohlenstofffreien Kalziumsalzes,
ii) Vorwärmen des Kalziumsalzes in einer Vorwärmeinrichtung,
iii) Erhitzen des Kalziumsalzes in einer Ofenreinrichtung auf mindestens 1.450 °C, wodurch CaO entsteht,
iv) Abkühlen des CaO in einer Abkühleinrichtung.

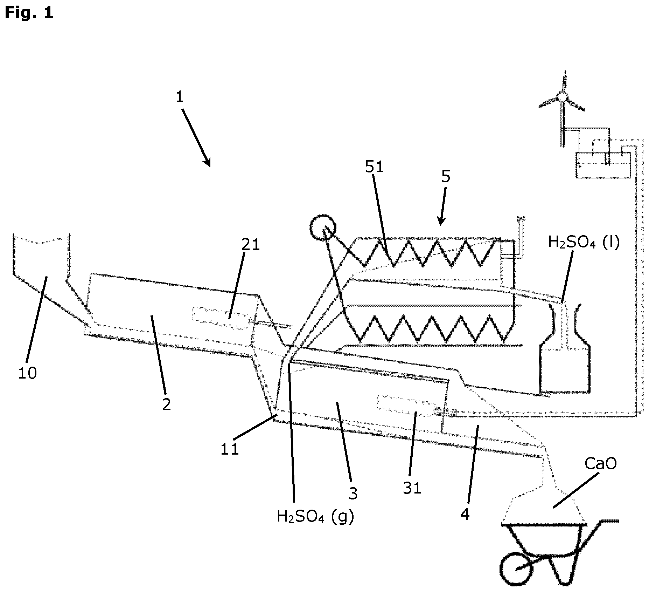

In Fig. 1 ist schematisch eine Ausführungsform einer Vorrichtung zur Durchführung des erfindungsgemäßen Verfahrens gezeigt.

In einer bevorzugten Ausführungsform werden in Schritt i) weiterhin Zementklinkerzuschlagsstoffe beigemischt, wodurch in Schritt iv) Zementklinker erhalten wird. Erfindungsgemäß können Zementklinkerzuschlagsstoffe ausgewählt aus Siliziumdioxid, Aluminiumoxid, Titandioxid und/oder Eisenoxid, verwendet werden. Ebenso geeignet sind Vorstufen der genannten Zementklinkerzuschlagsstoffe, welche bei den erfindungsgemäßen Verfahrensbedingungen zu den genannten Zementklinkerzuschlagsstoffen umgewandelt werden. Diese und weitere Zementklinkerzuschlagsstoffe sowie Vorstufen dieser sind dem Fachmann auf dem Gebiet der Technik hinlänglich bekannt und werden daher hier nicht erschöpfend aufgezählt.

In einer bevorzugten Ausführungsform ist das Calciumsalz (CaX) ausgewählt aus kohlenstofffreien Kalziumsalzen wie Anhydrit (CaSO₄), Gips (CaSO₄ · 2 H₂O), Bassanit (CaSO₄ · ½ H₂O), Kalziumnitrat (Ca(NO₃)₂) und Kalziumphosphat (Ca₃(PO₄)₂), bevorzugt aus Anhydrit (CaSO₄) und Gips (CaSO₄ · 2 H₂O). Ein Vorteil dieser Erfindung liegt darin, dass Abfallprodukte aus der Bauproduktion, z.B. alte Gipsbauplatten oder aus der Rauchgasentschwefelung (Gips) recycelt werden können, anstatt aufwändig entsorgt werden zu müssen.

CO₂-reduziertes Verfahren im Sinne der vorliegenden Erfindung ist dabei ein Verfahren, welches einen geringeren CO₂-Ausstoß verursacht als im Stand der Technik bekannte Verfahren und insbesondere einen geringeren CO₂-Ausstoß als das Müller-Kühne-Verfahren.

In einer weiteren bevorzugten Ausführungsform wird zum Heizen der Ofenreinrichtung 3 die Knallgasreaktion nach folgendem Mechanismus verwendet:

(I) H₂ + O₂ => H₂O + ΔT

Die Knallgasreaktion findet hier nicht explosionsartig statt, sondern wird kontrolliert und kontinuierlich verbrannt, um eine gleichmäßige Erhitzung der Ofeneinrichtung 3 zu ermöglichen.

In einer alternativen Ausführungsform wird zum Heizen der Vorwärmeeinrichtung 2 und der Ofeneinrichtung 3 die Knallgasreaktion nach folgendem Mechanismus verwendet:

(I) H₂ + O₂ => H₂O + ΔT

Durch die Knallgasreaktion kann nicht nur die Ofeneinrichtung 3, sondern auch die Vorwärmeeinrichtung 2 erhitzt werden. Da beim Verbrennen von Wasserstoff und Sauerstoff lediglich Wasser als Produkt entsteht, wird der COz-Ausstoß dadurch erheblich reduziert.

In einer weiteren bevorzugten Ausführungsform wird das kohlenstofffreie Kalziumsalz (CaX) in Schritt iii) auf eine Temperatur zwischen 1.400 °C und 1.500 °C, bevorzugt zwischen 1.425 °C und 1.475 °C erhitzt, um CaO zu erhalten, wobei X aus den folgenden Anionen ausgewählt sein kann: SO₄²⁻, NO₃⁻ und PO₄³⁻, bevorzugt SO₄²⁻.

In einer besonders bevorzugten Ausführungsform wird Kalziumsulfat als kohlenstofffreies Kalziumsalz in Schritt iii) auf eine Temperatur zwischen 1.400 °C und 1.500 °C, bevorzugt auf eine Temperatur zwischen 1.425 °C und 1.475 °C erhitzt und zu CaO und Schwefelsäure nachfolgenden Reaktionsgleichungen umgesetzt:

(I) H₂ + O₂ => H₂O + ΔT

(II) CaSO₄ + ΔT ⇒ CaO + SO₃

(III) SO₃ + H₂O ⇒ H₂SO₄ + ΔT

Der Vorteil besteht darin, dass nur CaO und Schwefelsäure als Produkte entstehen, welche beide wertvolle Rohstoffe darstellen. Es entstehen somit annähernd keine Abfallprodukte, welche kostenintensiv entsorgt werden müssen.

Das so erhaltene CaO wird insbesondere als Bestandteil von Zementklinker verwendet. Zementklinker umfasst üblicherweise zu einem überwiegenden Anteil CaO sowie Zementklinkerzuschlagsstoffe, wie beispielsweise Siliziumdioxid, Aluminiumoxid, Titandioxid und/oder Eisenoxid. Diese Zementklinkerzuschlagsstoffe können bei der erfindungsgemäßen Herstellung von CaO bereits zu Beginn des Verfahrens vorliegen. Alternativ ist es ebenfalls möglich, das erfindungsgemäß hergestellte CaO nach der Herstellung mit den Zementklinkerzuschlagsstoffen zu vermischen und gegebenenfalls zu sintern, wodurch der Zementklinker erhalten wird.

In einer weiteren Ausführungsform ist das Verfahren dadurch gekennzeichnet, dass die Knallgasreaktion nach Gleichung (I) Wasser als Produkt generiert, welches in Gleichung (III) als Edukt fungiert. Durch die Verwendung des Wassers, welches in Gleichung (I) entsteht, als Edukt in der letzten Gleichung (III) weist das Verfahren eine ausgezeichnete Atomökonomie auf, da fast keine Abfallprodukte entstehen, welche entsorgt werden müssen.

In einer weiteren Ausführungsform wird die Abwärme aus Schritt iii) und/oder der exothermen Reaktion (III) genutzt, um die Vorwärmeeinrichtung 2 aus Schritt (II) zu erwärmen. Durch die Verwendung der Abwärme aus den exothermen Reaktionen zum Heizen von einem oder mehreren Bauteilen der Produktionsvorrichtung 1, kann der CO₂ Ausstoß deutlich reduziert werden, wodurch das Verfahren noch umweltfreundlicher wird.

In einer weiter bevorzugten Ausführungsform wird die Vorwärmeeinrichtung 2 durch Brennstoffe, Abwärme aus der Ofeneinrichtung 3, der Knallgasreaktion nach Gleichung (I) und/oder der exothermen Reaktion (III) auf maximal 1400 °C erhitzt. Dies ermöglicht auf umweltfreundliche Art und Weise ein Vorwärmen des Ausgangsstoffs, also des kohlenstofffreien Kalziumsalzes, in der Vorwärmeeinrichtung 2. Die eigentliche Herstellung des CaO erfolgt dann in der Ofeneinrichtung 3. Das erfindungsgemäße Verfahren ermöglicht somit eine effektive Nutzung der Wärmeströme.

In einer bevorzugten Ausführungsform wird der Wasserstoff und der Sauerstoff für die Knallgasreaktion mit Hilfe von erneuerbaren Energien hergestellt. Durch die Verwendung von Strom aus erneuerbaren Energien zum Betreiben der Elektrolyseapparatur (zum Erhalt von Wasserstoff und Sauerstoff aus Wasser), wird der COz-Abdruck des erfindungsgemäßen Verfahrens noch weiter reduziert.

In einer besonders bevorzugten Ausführungsform wird der Wasserstoff und der Sauerstoff durch Elektrolyse vor Ort hergestellt und direkt in Gleichung (I) eingesetzt, wobei die benötigte Energie für die Elektrolyse durch erneuerbare Energien bereitgestellt wird. Durch die Herstellung und Bereitstellung des Wasserstoffes und des Sauerstoffes vor Ort, kann der Wirkungsgrad der Herstellung deutlich erhöht werden, da außer dem Wirkungsgrad der Elektrolyseapparatur kaum Verluste an Energie beim Transport oder der Lagerung der Gase auftreten. Vor Ort bedeutet dabei in räumlicher Nähe zu der CaO-Herstellung, insbesondere Zementklinkerherstellung, wobei Sicherheitsabstände selbstverständlich einzuhalten sind. Dennoch ermöglicht das erfindungsgemäße Verfahren die effektive Nutzung aller Materialien, ohne beispielweise Sauerstoff aus der Elektrolyse in die Luft entweichen zu lassen. Auch dies zeigt die Atomeffizienz des vorliegenden erfindungsgemäßen Verfahrens. Der Sauerstoff aus der Elektrolyseeinrichtung kann im Herstellungsverfahren effektiv genutzt werden.

In einer weiteren besonders bevorzugten Ausführungsform wird das überschüssige Wasser, welches beim Erhitzen der Ofeneinrichtung 3 und/oder der Vorwärmeeinrichtung 2 entsteht und nicht reagiert, abgeführt und der Elektrolyseapparatur zugeführt. Durch das Rückführen des überschüssigen Wassers in die Elektrolyseapparatur wird der Wirkungsgrad des gesamten Systems erhöht, da die Verluste an eingesetzten Rohstoffen reduziert werden.

In einer bevorzugten Ausführungsform fällt das CaO in Schritt iii) Gleichung (II) als Feststoff an, welcher direkt weiterverarbeitet werden kann. Insbesondere bevorzugt ist, wenn die Zuschlagsstoffe in diesem Schritt bereits vorlagen und am Ende des Schrittes iii) bereits der fertige Zementklinker erhalten wird, welcher zur Herstellung von Beton verwendet werden kann.

In einer weiteren bevorzugten Ausführungsform wird die Schwefelsäure, welche in Schritt iii) Gleichung (III) gasförmig anfällt, in eine Kondensationseinrichtung 5 geleitet. In der Kondensationseinrichtung 5 kondensiert die Schwefelsäure und wird abgefüllt. Bei dieser Kondensation handelt es sich um eine exotherme Reaktion.

Es ist weiterhin bevorzugt, dass die Wärme aus der exothermen Kondensation der Schwefelsäure genutzt wird, um die Vorwärmeeinrichtung 2 und/oder die Ofeneinrichtung 3 zu erwärmen. Durch die Kopplung der Kondensationseinrichtung 5 für die Schwefelsäure an die Ofeneinrichtung 3 können beide Produkte innerhalb einer Anlage produziert werden. Zusätzlich kann die entstehende Wärme aus der Entstehung der Schwefelsäure, sowie der Kondensation der Schwefelsäure der Ofeneinrichtung 3 zugeführt werden, um den externen Energieeinsatz, welcher zum Heizen der Produktionsvorrichtung 1 benötigt wird, zu reduzieren. Dadurch kann der COz-Fußabdruck deutlich reduziert werden.

Ein weiterer Vorteil des erfindungsgemäßen Verfahrens gegenüber dem Stand der Technik ist, dass in bevorzugten Ausführungsformen kein Reduktionsmittel benötigt wird. Das Verfahren ist somit vorzugweise in allen Schritten frei von Reduktionsmitteln und umfasst keinen Schritt der Zugabe von Reduktionsmitteln.

In einer weiteren Ausführungsform der vorliegenden Erfindung wird ein CO₂-neutraler Herstellungsprozess von Beton bereitgestellt, umfassend die folgenden Schritte:
a) Herstellung von Frischbeton durch Vermischen von Zementklinker, welcher CaO hergestellt nach dem Verfahren nach mindestens einem der Ansprüche 1 bis 8 enthält, mit Wasser nach folgender Formel:

   CaO + H₂O ⇒ Ca(OH)₂
b) Einbringen des Frischbetons an den gewünschten Ort,
c) Aushärtung des Frischbetons durch Reaktion mit Kohlenstoffdioxid aus der Luft nach folgender Formel:

   Ca(OH)₂ + CO₂ ⇒ CaCO₃ + H₂O
dadurch charakterisiert, dass
beim Aushärten des Frischbetons mehr CO₂ aus der Luft gebunden wird als im Herstellungsprozess des CaO, hergestellt nach einer oder mehreren der oben beschriebenen Ausführungsformen, freigesetzt wird.

Erfindungsgemäß weist der Zementklinker nur solches CaO auf, welches nach dem erfindungsgemäßen Verfahren hergestellt wurde. Der Beton kann erfindungsgemäß übliche Zusatzstoffe und Bindemittel für Beton aufweisen, welche in Schritt a) des Verfahrens zugegeben werden. Übliche Zuschlagstoffe sind Kies und Sand und sind dem Fachmann hinlänglich bekannt. Insbesondere umfass das Verfahren daher die folgenden Schritte:
a) Herstellung von Frischbeton durch Vermischen von Zementklinker, welcher CaO hergestellt nach dem Verfahren nach mindestens einem der Ansprüche 1 bis 8 enthält, mit Wasser und gegebenenfalls üblichen Bindemittel und/oder Zuschlagstoffen, wie insbesondere Kies und/oder Sand, nach folgender Formel:

   CaO + H₂O ⇒ Ca(OH)₂
b) Einbringen des Frischbetons an den gewünschten Ort,
c) Aushärtung des Frischbetons durch Reaktion mit Kohlenstoffdioxid aus der Luft nach folgender Formel:

   Ca(OH)₂ + CO₂ ⇒ CaCO₃ + H₂O

Der erfindungsgemäße Herstellungsprozess von Beton umfasst somit die folgenden Schritte:
i) Bereitstellung eines kohlenstofffreien Kalziumsalzes, bevorzugt Kalziumsulfat (CaSO₄),
ii) Vorwärmen des Kalziumsalzes in einer Vorwärmeinrichtung 2,
iii) Erhitzen des Kalziumsalzes in einer Ofeneinrichtung 3 auf mindestens 1.450 °C, wodurch CaO entsteht,
iv) Abkühlen des CaO in einer Abkühleinrichtung 4.

a) Herstellung von Frischbeton durch Vermischen von Zementklinker, welcher CaO hergestellt nach den Schritten i) bis iv) enthält, mit Wasser nach folgender Formel:

   CaO + H₂O ⇒ Ca(OH)₂
b) Einbringen des Frischbetons an den gewünschten Ort,
c) Aushärtung des Frischbetons durch Reaktion mit Kohlenstoffdioxid aus der Luft nach folgender Formel:

   Ca(OH)₂ + CO₂ ⇒ CaCO₃ + H₂O.

Erfindungsgemäß weist der Zementklinker nur solches CaO auf, welches nach dem erfindungsgemäßen Verfahren hergestellt wurde.

Der erfindungsgemäße Herstellungsprozess von Beton umfasst insbesondere die folgenden Schritte:
i) Bereitstellung eines kohlenstofffreien Kalziumsalzes, bevorzugt Kalziumsulfat (CaSO₄),
ii) Vorwärmen des Kalziumsalzes in einer Vorwärmeinrichtung 2,
iii) Erhitzen des Kalziumsalzes in einer Ofeneinrichtung 3 auf mindestens 1.450 °C, wodurch CaO entsteht,
iv) Abkühlen des CaO in einer Abkühleinrichtung 4.

a) Herstellung von Frischbeton durch Vermischen von Zementklinker, welcher CaO hergestellt nach den Schritten i) bis iv) enthält, mit Wasser und gegebenenfalls üblichen Bindemittel und/oder Zuschlagstoffen, wie insbesondere Kies und/oder Sand, nach folgender Formel:

   CaO + H₂O ⇒ Ca(OH)₂
b) Einbringen des Frischbetons an den gewünschten Ort,
c) Aushärtung des Frischbetons durch Reaktion mit Kohlenstoffdioxid aus der Luft nach folgender Formel:

   Ca(OH)₂ + CO₂ ⇒ CaCO₃ + H₂O.

Da beim Aushärten des Frischbetons CO₂ in einem äquimolaren Verhältnis gebunden wird, weist das erfindungsmäße Verfahren eine effektive CO₂-Senke auf. Dies lässt sich darauf zurückführen, dass bei der Herstellung des Zementklinkers aufgrund des Einsatzes von Anhydrit anstelle von Kalkstein, sowie der Nutzung der Abwärme der exothermen Reaktionen während des Verfahrens weniger CO₂ freigesetzt wird als bei den bisherigen Verfahren.

Frischbeton kann als Baustoff in unterschiedlichen Lebensbereichen eingesetzt werden. Diese sind allgemein bekannt. Die Herstellung des Frischbetons in Schritt a) kann unmittelbar auf die Herstellung des CaO, insbesondere des Zementklinkers erfolgen. Es ist erfindungsgemäß auch möglich, dass das erfindungsgemäß hergestellte CaO, insbesondere der Zementklinker zunächst gelagert und anschließend zur Herstellung von Frischbeton verwendet wird.

In einer weiteren Ausführungsform der vorliegenden Erfindung wird eine Produktionsvorrichtung 1 zur Herstellung von CaO, insbesondere von Zementklinker, aus einem kohlenstofffreiem Kalziumsalz unter Verwendung von Knallgas bereitgestellt, wobei die Vorrichtung das Folgende aufweist:
eine Vorwärmeinrichtung 2, welche dazu ausgebildet ist, ein zugeführtes kohlenstofffreies Kalziumsalz auf eine erste Temperatur, bevorzugt auf bis 1.400 °C, vorzuwärmen;
eine Ofeneinrichtung 3, welche dazu ausgebildet ist, dass mittels der Vorwärmeinrichtung 2 vorgewärmte kohlenstofffreie Kalziumsalz 11 weiter zu erhitzen auf eine zweite Temperatur zum Erhalt von CaO, insbesondere Zementklinker, und gasförmiger Schwefelsäure, H₂SO₄ (g), bevorzugt auf eine Temperatur von mindestens 1.450 °C;
eine Abkühleinrichtung 4, welche dazu ausgebildet ist das über die Ofeneinrichtung 3 erhaltene CaO, insbesondere Zementklinker, abzukühlen; sowie
bevorzugt eine Kondensationseinrichtung 5, welche dazu ausgebildet die gasförmige Schwefelsäure, H₂SO₄, an einem Wärmetauscher 51 zu kondensieren um dadurch flüssige Schwefelsäure, H₂SO₄, zu erhalten.

Die erfindungsgemäße Produktionsvorrichtung 1 ist derart ausgestaltet, dass ein erfindungsgemäßes Verfahren zur Herstellung von CaO, insbesondere Zementklinker, in dieser durchgeführt werden kann. Durch die Aufteilung in eine Vorwärmeeinrichtung 2, eine Ofeneinrichtung 3 und eine Abkühleinrichtung 4 können die Wärmeströme und Produktströme effektiv genutzt werden, was ein besonders effektives Verfahren ermöglicht. Durch die anhängige Kondensationseinrichtung 5 lässt sich gleichzeitig CaO, insbesondere Zementklinker, und Schwefelsäure herstellen, was sowohl Betriebs-, Transport-, Energie-, als auch Produktionskosten senkt.

In einer weiteren bevorzugten Ausführungsform ist die Ofeneinrichtung 3 so konfiguriert, dass das nach Gleichung (I) entstehende Wasser eine möglichst geringe Kontaktfläche mit dem entstehenden CaO, insbesondere Zementklinker, aufweist und eine möglichst große Kontaktfläche mit dem gasförmigen Schwefeltrioxid aufweist. Durch diese Konfiguration wird die Effizienz des Verfahrens erhöht, da so die Reaktion des CaO, insbesondere des Zementklinkers, mit Wasser verhindert wird, und die Reaktion von Wasser mit Schwefeltrioxid bevorzugt stattfindet.

In einer weiteren bevorzugten Ausführungsform weisen die Vorwärmeeinrichtung 2 und/oder die Ofeneinrichtung 3 und/oder die Abkühleinrichtung 4 jeweils einen Drehrohrofen auf. Durch die Verwendung eines Drehrohrofens kann eine gleichmäßige Temperatur innerhalb des Ofens erzielt werden, was für eine effiziente Reaktion vorteilhaft ist.

In einer weiteren bevorzugten Ausführungsform weist die Produktionsvorrichtung 1 eine Einrichtung auf, welches die Abwärme der Kondensationseinrichtung 5 der Ofeneinrichtung zuführt. Durch die Rückführung der Kondensationswärme in die Ofeneinrichtung, kann die Menge an Sauerstoff und Wasserstoff, welche in der Knallgasreaktion verwendet wird, reduziert werden, was wiederum zu einer günstigeren Produktion und zu einem geringeren Energieeinsatz innerhalb der Produktionsvorrichtung 1 führt.

In einer weiteren bevorzugten Ausführungsform wird die oben beschriebene Produktionsvorrichtung 1 verwendet, um das oben beschriebene Verfahren durchzuführen.

Im Nachfolgenden wird unter Bezugnahme auf die beigefügte Fig. 1 eine beispielhafte Ausführungsform einer erfindungsgemäßen Produktionsvorrichtung näher erläutert.

Die Fig. 1 zeigt die schematische Schnittansicht einer beispielhaften Ausführungsform einer erfindungsgemäßen Produktionsvorrichtung 1 zur Herstellung von CaO, insbesondere Zementklinker, aus einem kohlenstofffreien Kalziumsalz 10 unter Verwendung von Knallgas. Die erfindungsgemäße Produktionsvorrichtung 1 weist eine Vorwärmeeinrichtung 2 auf, welche dazu ausgebildet ist, ein zugeführtes kohlenstofffreies Kalziumsalz 10 auf eine erste Temperatur vorzuwärmen, wobei die erste Temperatur bevorzugt bis 1.400 °C beträgt, weiterhin aufweisend eine Ofeneinrichtung 3, welche dazu ausgeführt ist, dass mittels der Vorwärmeinrichtung 2 vorgewärmte kohlenstofffreie Kalziumsalz 11 weiter zu erhitzen auf eine zweite Temperatur zum Erhalt von CaO, insbesondere Zementklinker, und gasförmiger Schwefelsäure (H₂SO₄ (g)) bevorzugt auf eine Temperatur von mindestens 1.450 °C sowie weiterhin aufweisend eine Abkühleinrichtung 4, welche dazu ausgebildet ist, das über die Ofeneinrichtung 3 erhaltene CaO, insbesondere den Zementklinker, abzukühlen sowie bevorzugt aufweisend eine Kondensationseinrichtung 5, welche dazu ausgebildet ist, die gasförmige Schwefelsäure (H₂SO₄ (g)) an einem Wärmetauscher 51 zu kondensieren und dadurch flüssige Schwefelsäure (H₂SO₄ (I)) zu erhalten.

In der dargestellten beispielhaften Ausführungsform ist es vorgesehen, dass sowohl die Vorwärmeinrichtung 2, die Ofeneinrichtung 3 als auch die Abkühleinrichtung 4 jeweils als ein Drehrohrofen ausgebildet sind. Dabei kann es vorgesehen werden, dass die jeweilige Vorwärmeinrichtung 2 oder die Ofeneinrichtung 3 über eine Befeuerungsanlage 21 bzw. 31 verfügt, welche beispielsweise über Wasserstoff als Brennstoff beheizt wird. Der genutzte Wasserstoff kann wie dargestellt bevorzugt über einen Elektrolyseur erhalten werden, besonders bevorzugt unter Nutzung von nachhaltig produziertem Strom. Es kann jedoch auch vorgesehen werden, dass die Abwärme aus der ablaufenden exothermen chemischen Reaktion genutzt wird, um die Vorwärmeinrichtung 2 zu erwärmen. Ebenso kann es vorgesehen werden, dass die Vorwärmeinrichtung 2 durch die Abwärme aus der Ofeneinrichtung 3 erhitzt wird.

Dabei zeigen:

| | |
|---|---|
| 1 | Produktionsvorrichtung |
| 2 | Vorwärmeinrichtung |
| 3 | Ofeneinrichtung |
| 4 | Abkühleinrichtung |
| 5 | Kondensationseinrichtung |
| 10 | kohlenstofffreies Kalziumsalz |
| 11 | vorgewärmtes kohlenstofffreies Kalziumsalz |
| 21/31 | Befeuerungsanlage |
| 51 | Wärmetauscher |
| H₂SO₄ (g) | gasförmige Schwefelsäure |
| H₂SO₄ (I) | flüssige Schwefelsäure |

### Beispiele

In den nachfolgenden Beispielen wird die vorliegende Erfindung in nicht limitierender Weise weiter erläutert.

Beim herkömmlichen Verfahren wird sowohl beim Heizen der Ofeneinrichtungen als auch beim Erhitzen des Kalksteins CO₂ freigesetzt, sodass die Karbonatisierung des Frischbetons nicht genügend CO₂ bindet, um den CO₂-Fußabdruck auszugleichen. In der nachfolgenden Tabelle 1 (Werte aus: Forschungszentrum Karlsruhe in der Helmholtz-Gemeinschaft, Wissenschaftlicher Bericht FZKA 7189, https://publikationen.bibliothek.kit.edu/270064169) sind die Mengen an entstehendem CO₂ dargestellt:

**Tabelle 1. Herkömmliches Verfahren**

| | |
|---|---|
| Verwendung | CO₂-Betrag |
| Energieeinsatz | + 0,47 t |
| Umwandlung Kalkstein in CaO (CaCOs zu CaO + CO₂) | + 0,53 t |
| Bindung bei der Karbonatisierung | - 0,53 t |
| Summe | + 0,47 t |

Gegenüber diesem herkömmlichen Verfahren ist die CO₂-Emission des Müller-Kühne-Verfahren deutlich geringer, wie aus der nachfolgenden Tabelle 2 (Werte aus: Forschungszentrum Karlsruhe in der Helmholtz-Gemeinschaft, Wissenschaftlicher Bericht FZKA 7189, https://publikationen.bibliothek.kit.edu/270064169) hervorgeht:

**Tabelle 2. Müller-Kühne Verfahren**

| | |
|---|---|
| Verwendung | CO₂-Betrag |
| Energieeinsatz | + 0,47 t |
| Umwandlung Anhydrit in CaO (4 CaSO₄ + 2 C zu 4 CaO + 4 SO₂ + 2 CO₂) | + 0,26 t |
| Bindung bei der Karbonatisierung | - 0,53 t |
| Summe | + 0,20 t |

Das Müller-Kühne Verfahren reduziert den CO₂-Fußabdruck um etwa die Hälfte, da beim Erhitzen des Anhydrits, trotz Verwendung von Kohlenstoff als Reduktionsmittel nur die Hälfte an CO₂ ausgestoßen wird im Vergleich zum herkömmlichen Verfahren.

Eine weitere Reduktion des CO₂-Fußabdrucks ermöglicht das erfindungsgemäße Verfahren, wie aus Tabelle 3 hervorgeht.

**Tabelle 3. Erfindungsgemäßes Verfahren mit konventionellem Heizen der Vorwärmeeinrichtung**

| | |
|---|---|
| Verwendung | CO₂-Betrag |
| Energieeinsatz | + 0,47 t |
| Umwandlung Anhydrit in CaO (CaSO₄ + H₂ + O₂ zu CaO + H₂SO₄) | + 0,00 t |
| Bindung bei der Karbonatisierung | - 0,53 t |
| Summe | - 0,06 t |

In dem erfindungsgemäßen Verfahren mit konventionellem Heizen der Vorwärmeeinrichtung entsteht beim Brennen des Anhydrits kein Kohlenstoffdioxid, womit unter Einbezug der CO₂-Bindung bei der Karbonatisierung mehr CO₂ gebunden wird, als bei der Herstellung des CaO, insbesondere des Zementklinkers, entsteht.

**Tabelle 4. Erfindungsgemäßes Verfahren mit Heizen der Vorwärmeeinrichtung aus Abwärme der exothermen Reaktionen**

| | |
|---|---|
| Verwendung | CO₂-Betrag |
| Energieeinsatz | + 0,00 t |
| Umwandlung Anhydrit in CaO (4 CaSO₄ + 2 C zu 4 CaO + 4 SO₂ + 2 CO₂) | + 0,00 t |
| Bindung bei der Karbonatisierung | - 0,53 t |
| Summe | - 0,53 t |

Bei einem vollständig erfindungsgemäßen Verfahren mit Heizen der Vorwärmeeinrichtung aus der Abwärme der exothermen Reaktionen innerhalb der Produktionsvorrichtung 1 hat sich überraschenderweise gezeigt, dass die CO₂-Emission für das Heizen der Vorwärme- und der Ofeneinrichtung vollständig reduziert werden kann (siehe Tabelle 4). Durch die zusätzliche CO₂-freie Produktion von Schwefelsäure, welche als Rohstoffe in vielen Bereichen Anwendung findet, wird die Ökobilanz noch weiter verbessert.

## Patentansprüche

1. CO₂-reduziertes Verfahren zur Herstellung von CaO, aus einem kohlenstofffreiem Kalziumsalz unter Verwendung von Knallgas
umfassend folgende Schritte:
i) Bereitstellung eines kohlenstofffreien Kalziumsalzes, bevorzugt Kalziumsulfat (CaSO₄),
ii) Vorwärmen des Kalziumsalzes in einer Vorwärmeinrichtung (2),
iii) Erhitzen des Kalziumsalzes in einer Ofenreinrichtung (3) auf mindestens 1.450 °C, wodurch CaO entsteht,
iv) Abkühlen des CaO in einer Abkühleinrichtung (4).

2. Verfahren nach Anspruch 1, **dadurch gekennzeichnet, dass** in Schritt i) weiterhin Zementklinkerzuschlagsstoffe beigemischt werden, wodurch in Schritt iv) Zementklinker erhalten wird.

3. Verfahren nach Anspruch 1 oder 2, **dadurch gekennzeichnet, dass** zum Heizen der Ofeneinrichtung (3) in Schritt iii) des erfindungsgemäßen Verfahrens die Knallgasreaktion nach folgendem Mechanismus verwendet wird:
(I) H₂ + O₂ ⇒ H₂O + ΔT

4. Verfahren nach mindestens einem der Ansprüche 1 bis 3, **dadurch gekennzeichnet**, das Kalziumsulfat als kohlenstofffreies Kalziumsalz eingesetzt wird und in Schritt iii) folgende Reaktionen ablaufen:
(I) H₂ + O₂ ⇒ H₂O + ΔT
(II) CaSO₄ + ΔT ⇒ CaO + SO₃
(III) SO₃ + H₂O ⇒ H₂SO₄ + ΔT

5. Verfahren nach Anspruch 4, **dadurch gekennzeichnet, dass** die Knallgasreaktion nach Gleichung (I) Wasser als Produkt generiert, welches in Gleichung (III) als Edukt fungiert.

6. Verfahren nach mindestens einem der Ansprüche 1 bis 5, bei welchem die Abwärme aus Schritt iii) und/oder der exothermen Reaktion (III) genutzt wird, um die Vorwärmeinrichtung (2) aus Schritt ii) zu erwärmen.

7. Verfahren nach mindestens einem der Ansprüche 1 bis 6, bei dem die Vorwärmeinrichtung (2) durch Brennstoffe, Abwärme aus der Ofeneinrichtung (3) und/oder der Knallgasreaktion nach Gleichung (I) auf maximal 1400 °C erhitzt wird.

8. Verfahren nach mindestens einem der Ansprüche 1 bis 7, bei dem Wasserstoff und Sauerstoff für die Knallgasreaktion mit Hilfe von erneuerbaren Energien hergestellt wird.

9. Verfahren nach mindestens einem der Ansprüche 1 bis 8, bei dem dasCaO, insbesondere der Zementklinker, als Feststoff anfällt.

10. COz-neutraler Herstellungsprozess von Beton umfassend folgende Schritte:
a) Herstellung von Frischbeton durch Vermischen des Zementklinkers hergestellt nach dem Verfahren nach mindestens einem der Ansprüche 2 bis 9 oder enthaltend CaO hergestellt nach mindestens einem der Ansprüche 1 bis 9, mit Wasser nach folgender Formel:
CaO + H₂O ⇒ Ca(OH)₂
b) Einbringen des Frischbetons an den gewünschten Ort,
c) Aushärtung des Frischbetons durch Reaktion mit Kohlenstoffdioxid aus der Luft nach folgender Formel:
Ca(OH)₂ + CO₂ ⇒ CaCO₃ + H₂O
charakterisiert dadurch, dass
beim Aushärten des Frischbetons mehr CO₂ aus der Luft gebunden wird, als im Herstellungsprozess von Zementklinker nach mindestens einem der Ansprüche 2 bis 9, beziehungsweise im Herstellungsprozess von CaO nach mindestens einem der Ansprüche 1 bis 9 freigesetzt wird.

11. Herstellung von Schwefelsäure durch ein Verfahren wie in den Ansprüchen 1 bis 8 beschrieben, **dadurch gekennzeichnet, dass** die Schwefelsäure, welche in Schritt iii) Gleichung (III) gasförmig anfällt, in eine Kondensationseinrichtung (5) geleitet und dort kondensiert und abgefüllt wird.

12. Produktionsvorrichtung (1) zur Herstellung von CaO und/oder Zementklinker, aus einem kohlenstofffreiem Kalziumsalz (10) unter Verwendung von Knallgas, aufweisend:
eine Vorwärmeinrichtung (2), welche dazu ausgebildet ist, ein zugeführtes kohlenstofffreies Kalziumsalz (10) auf eine erste Temperatur, bevorzugt auf bis 1.400 °C, vorzuwärmen;
eine Ofeneinrichtung (3), welche dazu ausgebildet ist, dass mittels der Vorwärmeinrichtung (2) vorgewärmte kohlenstofffreie Kalziumsalz (11) weiter zu erhitzen auf eine zweite Temperatur zum Erhalt von CaO und/oder Zementklinker, und gasförmiger Schwefelsäure, H₂SO₄, bevorzugt auf eine Temperatur von mindestens 1.450 °C;
ein Abkühleinrichtung (4), welche dazu ausgebildet ist, das über die Ofeneinrichtung (3) erhaltenen CaO und/oder den Zementklinker, abzukühlen; sowie bevorzugt eine Kondensationseinrichtung (5), welche dazu ausgebildet ist, die gasförmige Schwefelsäure, H₂SO₄ (g), an einem Wärmetauscher (51) zu kondensieren um dadurch flüssige Schwefelsäure, H₂SO₄ (I), zu erhalten.

13. Produktionsvorrichtung (1) nach Anspruch 12, wobei die Vorwärmeinrichtung (2) und/oder die Ofeneinrichtung (3) und/oder die Abkühleinrichtung (4) jeweils einen Drehrohrofen aufweisen.

14. Produktionsvorrichtung (1) nach Anspruch 12 oder 13, wobei die Abwärme der Kondensationseinrichtung (5) der Vorwärmeinrichtung (2) zugeführt werden.

15. Verwendung der Produktionsvorrichtung (1) nach mindestens einem der Ansprüche 12 bis 14 zur Durchführung des Verfahrens gemäß mindestens einem der Ansprüche 1 bis 11.
